# EUROPEAN PATENT SPECIFICATION

(11) **EP 3 575 234 B1**
(45) Date of publication and mention of the grant of the patent: **25.10.2023**
(21) Application number: 19174791.4
(22) Date of filing: 16.05.2019
(51) Int. Cl.: B65D 41/10, H04W 4/38

(54) **CROWN CAP GAME DEVICE**
KRONKORKENSPIELVORRICHTUNG
DISPOSITIF DE JEU À CAPSULES

(30) Priority: 30.05.2018 PL 42579518
(43) Date of publication of application: 04.12.2019
(73) Proprietor: CAPS APPS Sp. z.o.o., 00-545 Warszawa (PL)
(72) Inventor: Oryl, Radowslaw, 09-407 Plock (PL)
(74) Representative: Domon, Magdalena

(56) References cited:
- WO-A1-2011/082405
- US-A1- 2016 146 659
- US-B2- 9 445 972

## Description

The object of the invention is a crown cap game device using the standard glass bottle crown cap.

The crown cap, otherwise known as the crown cork, is, next to the screw-in cap, the most popular glass bottle closure known, as it guarantees complete tightness of the bottle, and thus the preservation of the liquid contained. It is made of steel sheeting, usually coated with paint to form the manufacturer's name or logo. Inside the cap, there is a plastic layer which does not affect the taste or the odor of the liquid, and which also serves as a seal.

The dimensions of the caps are standardized, and all of them have 21 teeth which cling to the bottle.

Apart from their primary role, which is to close and seal bottles, crown caps have been long used to create various games.

The most popular games are children's cap games which all share a common element - the crown cap which is put into motion on a flat surface, using a stroke (a flick) performed with one's fingers.

Some of the most common games involve weighed caps, which are filled either with wax, modeling clay, gypsum or lead, sometimes additionally weighed with coins. They are often intricately decorated.

Many types of games involving crown caps are known. For instance, there is the game called the "toss", where the players take turns to toss caps against a wall. The player whose cap lands closest to the wall wins and takes a cap from each of the other players.

Another example is the "battle", where the players try to hit opponent caps with their own caps, and to knock them out of the field.

In another known example of cap games called the "race", also referred to as the "peace race", the players take turns to flick their caps. The player who completes the obstacle course or a route first wins, whereas if the cap falls out of the course, the player is penalized by going back by one stroke. Additionally weighed caps have an advantage here, as they are less likely to enter into uncontrolled rolling motion. These caps are usually equipped with state flags which are either glued to the cap using modeling clay or pressed from the top using a piece of transparent plastic or stiff foil.

One of the other known games is "football", where there are two teams. In this game, one cap is designated as the ball and the players hit (flick) the ball, aiming to place it in the opponent's goal. These games are usually played on yards - directly on the asphalt or in the sandbox.

Other examples, not covered by the current invention, of the crown cap game involve computer applications or are played online, where players compete in matches using the computer, laptop, tablet or smartphone screen. These games are virtual and do not involve physical contact of the player with an actual crown cap.

In the course of these games, and particularly during tournaments, frequent disputes arise in connection with the cap movement. This applies to games involving physical contact of the player with the cap, where the cap is flicked with one's finger. Since the flicking motion is very fast, the contestants are never certain about the trajectory of the cap or about any intermediate impacts.

In this case, the VAR (Video Assistant Referee) system offers a significant opportunity to verify the results. The system is applied, among others, in football matches, and aims at preventing errors committed by in-field referees. The use of this system during crown cap tournaments and matches is however hindered due to its high price, its complexity and its large size, which makes it impossible to use anywhere games are played.

Even if in the art there were some attempts to create different devices or games aiming at monitoring final localization of the objects, none of them is related to a crow cap game, which is a dynamic game, and further none of these solutions would be suitable for a crown cap game.

In the state of the art there are virtual games which enable projection of an interactive game environment image on a surface. For example WO 2011/082405 A1 patent description discloses the invention relating to projection of an interactive game environment image on a surface. The interactive game environment image may be a three-dimensional image, or may be two-dimensional. Data is received that represents virtual objects that are spatially positioned in the virtual game environment. An image of the game environment is then projected on the substantially horizontal surface that includes a visual representation of all of the virtual space and the virtual objects.

The system may then detect user interaction with the projected visualized representation of the virtual space and change the projected visualized representation. This interaction can be either through an input device or direct physical interaction with the virtual projection environment. During direct interaction the user can interact with the virtual objects in the displayed virtual environment or with the physical objects that are in the area of the displayed environment/image e.g. a board game.

The game display mechanism is based on a light-emitting device that defines/specifies multiple input images with multiple players therein. Each of the input areas is a part of the playing field where a player has to make a physical move, e.g. throw a dice, play cards or place some pawns in order to have an impact on the game. The scanning mechanism scans objects in the input areas and the communication mechanism sends out information about the scanned objects.

WO2011/082405A1 does not relate to crown cap and a crown cap game, and the solution disclosed in WO2011/082405A1 could not be used for the crown cap game. It is not possible to monitor a game of crown caps by means of the invention disclosed in WO2011/082405A1 as its core function is to display virtual environment and limited areas. The crown cap game requires an unlimited area both on the surface and in the air. Thus his device is not suitable for monitoring a game of caps. Caps game is a popular game played on pavements and streets, where there are no area restrictions and there is no room for setting up an additional central device to monitor the activity of the cap.

This solution disclosed in WO2011/082405A1 focuses on different types of the game, has different characteristics and thus would not suitable for dynamic crown cap game.

The device as disclosed in WO2011/082405A1 is not capable and does not serve to read directly the dynamic values from a cap e.g.:
- after being hit by another cap and made to move away a long distance (several meters) outside the projection area;
- when a cap is flicked upwards (into the air) outside of the projection area (as the projector only collects data from a limited flat area and not from an unlimited air space);
- when a cap is held in a clenched hand, the projector cannot see the cap and thus cannot read the cap activity in the 3D space.

In an alternative embodiment the solution disclosed in WO2011/082405A1 focuses also on representing the final orientation of physical objects played by the players. In this case the physical objects (game input devices) are used. This orientation-sensing game input device includes an orientation sensor that, when active, outputs a spatial orientation signal representing a final spatial orientation of the game input device. Since this device disclosed in this document does not relate to dynamic game, and no dynamic parameters are monitored, the game input device mentioned in WO2011/082405A1, may be anything without any difference: a game piece miniature, bottle caps, plastic bone pieces, cans, tokens, blocks, house or hotel pieces, marbles, jewels, treasure chest lid, jelly beans, checker pieces, any type of wood, plastic or metallic game pieces.

As disclosed in WO2011/082405A1, the orientation sensor is able to detect how the game input device is oriented with respect to vertical, and/or how the game input device is oriented with respect to north. Depending of the embodiment, the orientation sensor may be an accelerometer or a compass that generates a direction signal indicating a geographical orientation. The device may also have a Global Positioning System (GPS) that allows the orientation-sensing device to detect a global position of the orientation-sensing device in global coordinates. For example, in case of multi-sided die, the special orientation signal may indicate or at least include enough information to infer which side of the die is facing up. If the orientation-sensing device is a playing card or a coin, the spatial orientation signal may include enough information to infer whether the playing card is face up or face down, or which side of the coin is facing up. If the orientation sensing device is a domino tile, the spatial orientation signal may convey whether the domino tile were face up or face down, or which direction the domino was oriented on the table.

For instance, if the device were a coin, the device might transmit the device type identifier that identifies the device as a coin, and so forth for other types of devices. The device might also transmit information from which the central device might infer other characteristics of the device as well, such as color, size, shape.

However this solution does not relate to and would not be suitable for a crown cap game, which is a very dynamic game.

WO 2016/0146659 A1 discloses a sensor operative to track changes in a liquid level of a hand-held liquid container, the sensor comprising:
1. an ultrasonic liquid-level sensor configured to indicate a liquid level of a liquid in a hand-held liquid container, wherein the ultrasonic liquid-level sensor is capable of indicating the liquid level when the surface of the liquid is less than 20 centimeters away from the ultrasonic liquid-level sensor;
2. a radio transmitter; and a processor configured to draw power from a portable power source, receive liquid-level indications from the ultrasonic liquid-level sensor, and cause the radio transmitter to transmit data indicative of changes in the liquid level.

The device of WO 2016/0146659 A1 discloses bottle cap with some ultrasonic sensors however it does not relate to a crown cap it cannot be used in the crown cap game device to monitor the parameters of the cap. The crown cap used in games is a low (6 mm) metal crown cap that cannot be mounted on any bottle. It is only used to move quickly on a flat surface and in the air when it is flicked with fingers. Thus the solution of WO 2016/0146659 A1 would not be suitable for crown cap game device and to solve the problem for the human eye to track and count the movements of the cap resulting from the flicking and collisions with another cap.

US 9,445,972 B2 discloses a monitor for monitoring consumption of pills from a container, the monitor comprises: an interface; a controller; multiple sensors of different types, an alert element; and a transceiver that is configured to exchange information with one or more devices that differ from the monitor; wherein the interface is configured to interface with the container; wherein when the monitor interfaces with the container the multiple sensors are configured to detect an attempt to consume a pill (or pills) from the container and evaluate the amount of pills within the container; wherein the controller is configured to trigger an erroneous consumption alert when the attempt to consume the pill does not correspond to a desired pill consumption schedule.

It is not possible to monitor the game of crown caps with this invention.

The purpose of the invention is to create a crown cap game device which would combine a game consisting in its real, physical and non-virtual playing applying measurement instruments, with a mobile application for smartphones, tablets and other mobile devices, to ensure that the players compete according to the rules and that all disputes arising during games are eliminated.

The invention is defined by the appended independent claim and further embodiments are described by the dependent claims.

The object of the invention is presented in its various embodiments in the figure.

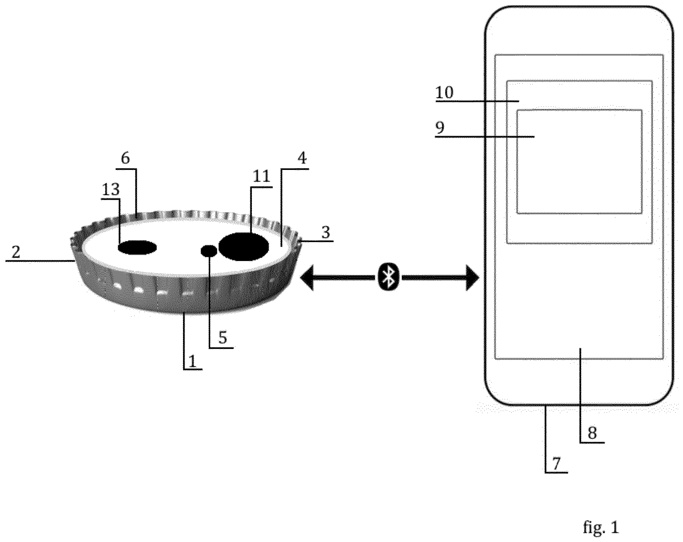

Fig. 1 presents a crown cap 2 where a measurement device 4 in the form of an accelerometer 11 which clings to its wall 6 is installed below the teeth 3, in the bottom 1 of the cap. The device is equipped with a Bluetooth module 5 which provides a connection with a mobile device 7. This figure includes a schematic of the mobile device 7 which is equipped with a mobile application 8. The purpose of the mobile application 8 is to analyze and display data 9 from the accelerometer 11. Using the mobile application, the user of the smartphone, tablet or any other mobile device decides which data 9 is to be analyzed and which information is to be displayed on the screen 10 of the mobile device 7. In the figure, the device in the form of an accelerometer 11 has the form of an electronic overlay placed on the cap. The figure also includes a LED 13 which can be used to visually signal the activity of the cap 2. Thanks to the Bluetooth module, the user can turn the LED 13 on via a mobile application installed on the mobile device 7, in order to identify their cap 2.

Placed next to the accelerometer 11, the Bluetooth module 5 is used to connect to a mobile device 7, and thus to monitor and analyze the following data 9 recorded for the cap 2: impact, impact force, angle, displacement, acceleration, speed, rotation, vibration and shocks. In the accelerometer 11, three separate outputs measure acceleration in axes X, Y and Z and this information are used to determine the majority of parameters related to linear movement for each of the axes in a coordinate system.

Thanks to the data 9 recorded by the accelerometer 11, one can determine the direction and the value of acceleration of the cap 2, and determine the force, with which it was hit, and, furthermore, to determine the speed of the cap 2, its distance, position and orientation relative to the ground. Indications obtained from the accelerometer 11 may be then used to integrate the acceleration vector in order to determine the speed vector, or to determine the displacement - by re-integrating. Placed in the bottom 1 of the cap 2, the accelerometer 11 itself is an electromechanical device sensing static or dynamic acceleration forces. Static forces include gravity, whereas dynamic forces include vibrations and movement. Measuring static acceleration relative to gravity, to determine the cap 2 angle relative to the ground.

Sensing the dynamic acceleration, one can analyze the movement of the cap 2. Apart from determining the values of linear accelerations, it is possible to use them to determine the spatial position of the cap, and to execute specific interactions during its movement. Thanks to the accelerometer 11, one can detect even the slightest impact, otherwise invisible to the naked eye. This solution allows detecting impact with another object, such as another cap.

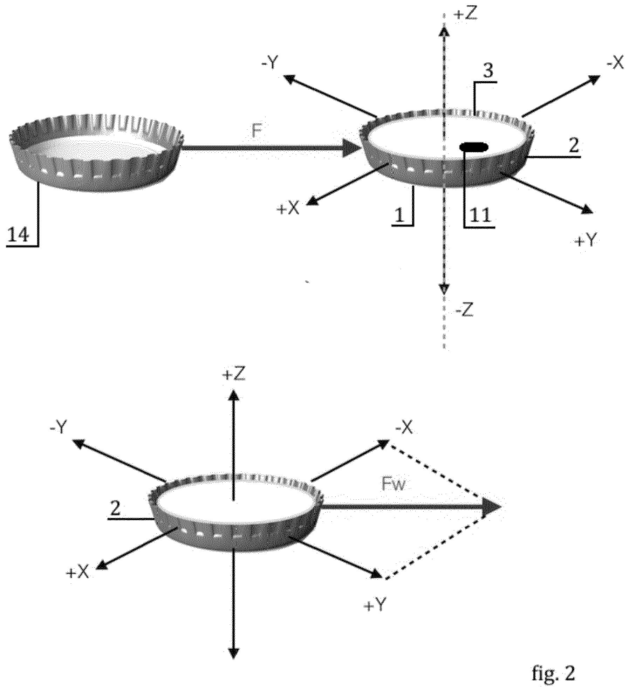

Fig. 2 presents a situation where cap 14 hits cap 2 with a force of impact presented as vector F. In the cap 2, below the teeth 3, in its bottom 1, there is an accelerometer 11 which measures the force presented as vector Fw which acts on the cap 2 after it is hit by cap 14. This allows for measuring the displacement, and thus the impact with another object, and the force, with which the cap 2 was hit by cap 14. In this case, it is also possible to measure the acceleration, speed and displacement of the cap 2 after impact.

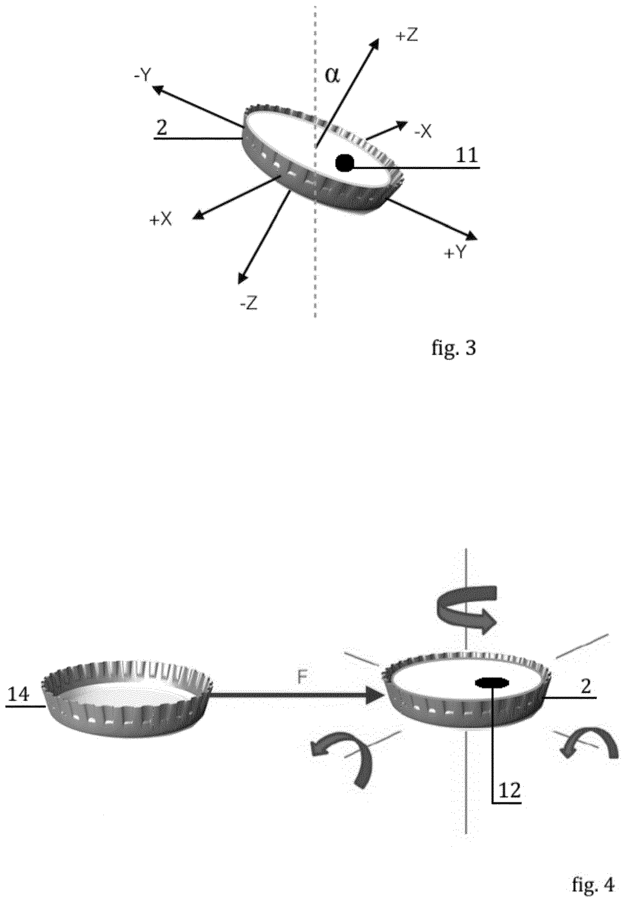

Fig. 3 presents a situation where the position of the cap 2 changes in axis Z by angle *α* in 3D space. For a three-dimensional accelerometer 11, changes in position can be detected for each of the three axes X, Y and Z.

A gyroscope is used if it is necessary to detect and measure the rotation of an object, its rotation angle, and its rotational speed. The gyroscope is primarily intended to monitor the rotations around the axis of the cap, and this type of movement differs from the remaining types, as the object in question can rotate but the force of gravity G applied on the gyroscope needs not change. Contrary to the accelerometer which measures the linear acceleration of a device, the gyroscope directly measures its orientation.

The use of a gyroscope is illustrated in an embodiment of the invention in fig. 4.

This figure presents cap 14 hitting cap 2 with a force having a vector of F. The cap 2 is equipped with a gyroscope 12. After the impact, the cap 2 is set into rotary motion. To better illustrate it, the movement was marked with thick red arrows. The gyroscope 12 detects rotations for each of three axes X, Y and Z, thus detecting impact with another object.

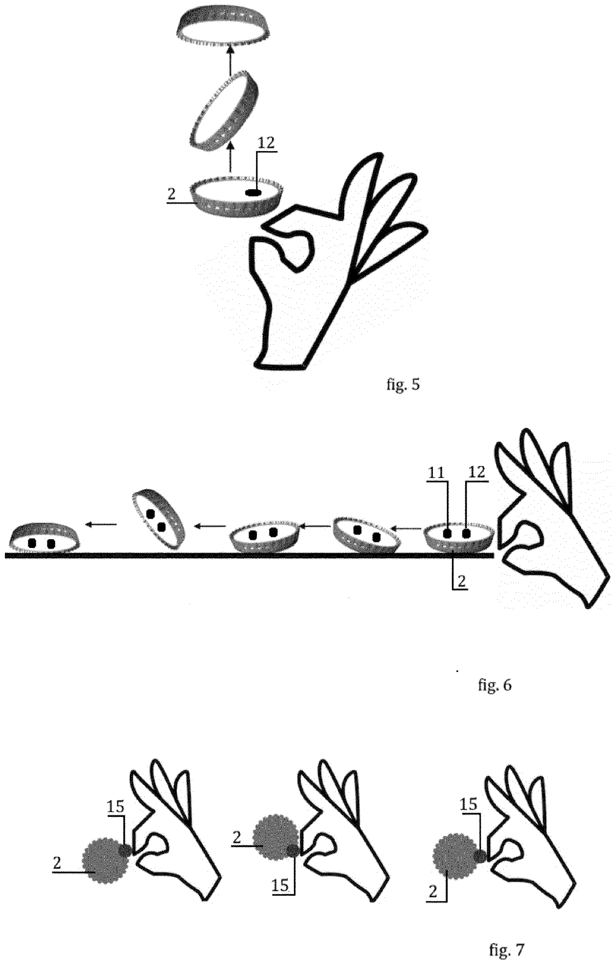

Fig. 5 presents a cap 2 equipped with a gyroscope 12. The cap 2 revolves in the air after it is flicked by a finger upwards. In this case, the gyroscope 12 detects the number of revolutions of the cap 2 in the air.

It is also possible to combine an accelerometer and a gyroscope. In this case, the accelerometer is more accurate in static calculations, when the cap reaches a fixed reference point, whereas the gyroscope recognizes the cap's orientation when it is moving.

This combination is presented in fig. 6.

This figure presents a fusion of an accelerometer 11 and a gyroscope 12. This fusion can be used to trace and analyze the behavior of the cap 2 in 3D space after impact.

Fig. 7 presents another application of an accelerometer and a gyroscope.

A circle 15 marks the way, in which the cap 2 can be hit (flicked) at its different widths and heights. The point of impact affects the precision and force of the shot. Data from the accelerometer and gyroscope can be used to trace and analyze the behavior of the cap 2 after impact. These records can be used by the user to improve their technique.

It is also possible to use an additional measurement device in the form of a magnetometer, which was not presented in the figure. In this case, the magnetometer is installed next to the accelerometer and the gyroscope. Combining an accelerometer, a gyroscope and a magnetometer, the user can obtain more accurate data on the movements of the cap, particularly in 3D space. Thanks to the Bluetooth module, the data obtained from the device can be recorded, processed and analyzed on a mobile device using a mobile application.

Each change in the position of the cap, including among others its displacement, deflection or rotation in 3D space can be monitored thanks to the invention, which will allow for detecting the following activities of the cap: detection of impact with another object, cap acceleration, detection of an event, force, with which the cap was hit, force, with which the cap hit another object, number of cap revolutions in 3D space, current position of the cap in 3D space, analysis of movements in 3D space.

Data from the X, Y and Z axes will be used to detect the accuracy, at which the cap was hit. This affects the quality of the stroke, and particularly the acceleration, angle and rotation of the cap in motion. Each of these parameters can be sensed by the measurement device, that is by the accelerometer and the gyroscope.

Communication with a mobile device can be used to monitor, assess, and thus improve the force and technique of flicking the cap. Thanks to the invention, the player can significantly improve their technique.

The invention can be used to create a crown cap game which would combine a game consisting in its real, physical and non-virtual playing applying measurement instruments, with a mobile application for smartphones, tablets and other mobile devices.

The invention ensures that sports rivalry is always conducted according to the rules, and eliminates any disputes among the players concerning the movements and impacts of caps used in the game.

The invention will be used to play crown cap games, particularly during tournaments and competitions.

## Claims

1. A crown cap game device comprising crown cap and a measurement device, wherein the crown cap comprises a bottom and a wall (6), wherein a part of the wall (6) is in a form of teeth (3), and wherein a crown cap (2) is configured to travel in all directions along X, Y and Z axes during the game **characterized in that**
the measurement device (4) is measuring the static and dynamic forces acting on the crown cap and crown cap's dynamic parameters, and the measurement device is equipped with a Bluetooth module which (5) provides a connection with a mobile device
wherein the measurement device and the Bluetooth module are installed in the bottom (1) of the crown (3) cap (2), clinging to the wall (6), and the measurement device and the Bluetooth module are part of an electronic overlay placed on the crown cap,
wherein the measurement device includes an accelerometer or/and a gyroscope, wherein based upon the data recorded by the accelerometer, a direction and a value of acceleration of the crown cap is determined, and the force, with which the crown cap was hit is determined by the accelerometer,
wherein in the accelerometer three separate outputs provide a measure of acceleration in axes X, Y and Z and this information is used to determine parameters related to linear movement for each of the axes X, Y and Z,
wherein the accelerometer is configured for sensing gravity, vibrations and movement of the crown cap, whereas measuring static acceleration relative to gravity determines the crown cap angle relative to the ground, and wherein the accelerometer detects impact with another object such as another cap, and wherein it is possible to measure the acceleration, speed and displacement of the crown cap after impact,
or/and the gyroscope is used to detect and measure the rotation of the crown cap, the crown cap rotation angle, and the crown cap rotational speed for each of the three axes X, Y and Z, the gyroscope also used to detect impact with the said another object and wherein the gyroscope detects the number of revoutions of the crown cap in the air.

2. The crown cap game device according to claim 1, **characterized in that** the measurement device (4) has a LED (13).

3. The crown cap game device according to claim 1, **characterized in that** an additional measurement device (4) in the form of a magnetometer is installed in the bottom (1) of the crown (3) cap (2).

## Patentansprüche

1. Ein Kronkorken-Spielgerät, das aus einem Kronkorken und einer Messvorrichtung besteht,
wobei der Kronkorken einen Boden und eine Wand (6) aufweist,
wobei ein Teil der Wand (6) in Form von Zähnen (3) ausgebildet ist,
und wobei der Kronkorken (2) so konfiguriert ist, dass er sich während des Spiels in alle Richtungen entlang der X-, Y- und Z-Achse bewegen kann,
**dadurch gekennzeichnet, dass**
die Messvorrichtung (4) die statischen und dynamischen Kräfte, die auf den Kronkorken wirken, und die dynamischen Parameter des Kronkorkens misst,
und die Messvorrichtung mit einem Bluetooth-Modul ausgestattet ist, das (5) eine Verbindung mit einem mobilen Gerät herstellt, wobei die Messvorrichtung und das Bluetooth-Modul im Boden (1) des Kron(3)-Korkens (2) installiert sind, an der Wand (6) anliegend,
und die Messvorrichtung und das Bluetooth-Modul Teil eines elektronischen Overlays sind, das auf dem Kronkorken angebracht ist,
wobei die Messvorrichtung einen Beschleunigungsmesser oder/und ein Gyroskop umfasst,
wobei, basierend auf den vom Beschleunigungsmesser aufgezeichneten Daten, die Richtung und der Wert der Beschleunigung des Kronkorkens bestimmt werden,
und die Kraft, mit der der Kronkorken getroffen wurde, durch den Beschleunigungsmesser bestimmt wird,
wobei drei separate Ausgänge im Beschleunigungsmesser die Messung der Beschleunigung in der X-, Y- und Z-Achse ermöglichen
und diese Information verwendet wird, um Parameter der linearen Bewegung für jede der X-, Y- und Z-Achsen zu bestimmen,
wobei der Beschleunigungsmesser so konfiguriert ist, dass er die Schwerkraft, Vibrationen und die Bewegung des Kronkorkens erfasst,
wobei die Messung der statischen Beschleunigung in Bezug auf die Schwerkraft den Winkel des Kronkorkens in Bezug auf den Boden bestimmt, und wobei der Beschleunigungsmesser Aufprall auf ein anderes Objekt, wie z.B. einen anderen Kronkorken, erfasst, und wobei es möglich ist, die Beschleunigung, die Geschwindigkeit und die Verlagerung des Kronkorkens nach dem Aufprall zu messen,
oder/und das Gyroskop verwendet wird, um die Rotation des Kronkorkens, den Rotationswinkel des Kronkorkens und die Rotationsgeschwindigkeit des Kronkorkens für jede der drei X-, Y- und Z-Achsen zu erfassen und zu messen, wobei das Gyroskop auch verwendet wird, um einen Aufprall auf das oben genannte andere Objekt zu erfassen, und wobei das Gyroskop die Anzahl der Umdrehungen des Kronkorkens in der Luft erfasst.

2. Ein Kronkorken-Spielgerät nach Anspruch 1, **dadurch gekennzeichnet, dass** die Messvorrichtung (4) eine Leuchtdiode (13) aufweist.

3. Ein Kronkorken-Spielgerät nach Anspruch 1, **dadurch gekennzeichnet, dass** eine zusätzliche Messvorrichtung (4) in Form eines Magnetometers in den Boden (1) des Kron(3)-Korkens (2) eingebaut ist.

## Revendications

1. Un dispositif de jeu de capsule couronne se composant d'une capsule couronne et d'un dispositif de mesure,
où la capsule couronne comprend un fond et un cloison (6),
où une partie du cloison (6) prend la forme de dents (3),
et où une capsule couronne (2) est configurée de façon à se déplacer dans tous les sens au long des axes X, Y et Z pendant le jeu
**caractérisé en ce que**
le dispositif de mesure (4) mesure les forces statiques et dynamiques exercées sur la capsule couronne ainsi que les paramètres dynamiques de la capsule couronne,
et que le dispositif de mesure est doté d'une module Bluetooth qui (5) assure une connexion avec un appareil mobile, le dispositif de mesure et la module Bluetooth étant installés au fond (1) de la capsule (2) couronne (3), accrochée au cloison (6),
et que le dispositif de mesure et la module Bluetooth font partie d'une superposition électronique posée sur la capsule couronne,
où le dispositif de mesure comprend un accéléromètre ou/et un gyroscope,
où, sur la base des données enregistrées par l'accéléromètre, un sens et une valeur d'accélération de la capsule couronne sont déterminés ainsi que la force avec laquelle la capsule couronne a été visée est déterminée par l'accéléromètre
au sein duquel trois sorties indépendantes mesurent l'accélération dans les axes X, Y et Z,
ces données étant utilisées pour déterminer les paramètres liés au mouvement linéaire pour chacun des axes X, Y et Z,
où l'accéléromètre est configuré de manière à capter la gravitation, les vibrations et le mouvement de la capsule couronne,
alors que le mesurage de l'accélération statique relative à la gravitation détermine l'angle de la capsule couronne par rapport au sol et où l'accéléromètre détecte l'impact avec un autre objet tel qu'autre capsule couronne et où il est possible de mesurer l'accélération, la vitesse et le déplacement de la capsule couronne suite à l'impact ou/et
le gyroscope est utilisé pour détecter et mesurer la rotation de la capsule couronne, l'angle de rotation de la capsule couronne ainsi que la vitesse de rotation de la capsule couronne pour chacun des trois axes X, Y et Z, le gyroscope étant aussi utilisé pour détecter l'impact avec l'autre objet susvisé et où le gyroscope détecte le nombre des mouvements rotatifs de la capsule couronne dans l'air.

2. Le dispositif de jeu de capsule couronne conforme à la revendication 1, **caractérisé en ce que** le dispositif de mesure (4) est doté d'une diode électroluminescente (13).

3. Le dispositif de jeu de capsule couronne conforme à la revendication 1, **caractérisé en ce qu'**un dispositif de mesure supplémentaire (4) sous forme de magnétomètre est mis en place au fond (1) de la capsule (2) couronne (3).
